# EUROPEAN PATENT APPLICATION

(11) **EP 1 260 145 A1**
(43) Date of publication of application: **27.11.2002**
(21) Application number: 02010693.6
(22) Date of filing: 14.05.2002
(51) Int. Cl.: A23K 1/00, A23K 1/08, A23K 1/16, A23K 1/18

(54) **Microencapsulated and/or microgranulated product for animal feeding with a base of powdered milk, its derivatives and vegetable fats and intended use of this product**

(30) Priority: 25.05.2001 IT PD20010116
(71) Applicant: SILA S.r.l., 30030 Noale (VE) (IT)
(72) Inventor: Lorenzon, Maurizio, 30030 Noale (VE) (IT)
(74) Representative: Gustorf, Gerhard, Dipl.-Ing.

(57) **Abstract**

The invention concerns a new product, a new production system for milk replacers, and a new method of use of milk replacers. The product is obtained by means of a spray-cooling system which consists of propagating the milk replacers with sugars and other proteins, even of vegetable origin, in a system of vegetable fats: spray-cooling (initial liquid phase and solid phase in fast cooling chambers, where it takes on the form of microcapsules and microgranules). With this new technique it is possible to completely eliminate the reconstitution of powdered milk and the animals are fed with a microencapsulated-microgranulated product which guarantees the same performance as other milk replacers, but has the great advantage of being used just as it is, with no need to be reconstituted. The product is administered just as it is in the feeding trough or through self-feeders, unifeed mixers for dry feed already in use in cattle and/or pig and poultry farms, in the desired quantities.

## Description

The present patent concerns the sector of animal foodstuff and in particular it concerns a milk replacer, and more specifically the production of complete foodstuff for the suckling phase and/or compounds and/or pre-mixes for animals in the suckling, weaning and fattening phase.

It is known that milk is a product of the secretion of the mammary glands of the females of mammals and that these secretions vary according to the species.

In the milk feed sector, the milk most used is cow milk which is produced by regular, uninterrupted and complete milking of the udders of animals in a good state of health and nutrition.

Milk is a liquid with particular characteristics: colour, smell and taste. Milk is a simple and complex product at the same time, because it is an aqueous system which comprises:
1. a solution state in which sugars, salts and water-soluble vitamins are soluble;
2. a colloidal solution state where part of the milk proteins, called whey proteins are to be found.;
3. a suspension state where casein and magnesium salts are to be found;
4. an emulsion state where lipids and liposoluble vitamins are to be found.

Technological progress, the ever increasing management costs and market problems are causing farmers to modify the production and raising method and the way it is managed.

To solve these problems and to guarantee correct and easy feeding and convenient administration of food to farm animals, a new product has been studied with a base of milk, skimmed milk powder and/or its derivatives and vegetable fats, which does not need reconstitution in water at the time of administration, as do all the products currently on the market,.

The first advantage lies in the fact that this system eliminates all the working processes (reconstitution and mixing with hot water at temperatures ranging from 40 to 75°C) at the time of use for animal feeding. Another advantage is that of not having to use a soluble products but rather a dry product for direct feeding, so as to dispense a product without the aid of a liquid vehicle.

Another advantage is the reduction of plant costs, with an enormous facilitation of use by the final operator.

Another advantage is that of having a product with only one physical form (microcapsule and/or microgranule), containing all the components necessary for correct feeding, instead of a pre-mix where, at the time of reconstitution, the individual components are exposed to possible processes of degradation.

The present system of use contemplates certain measures and instruments in order to accomplish animal feeding.

At present the products on the market (milk replacers) are all defined as: complete feed for calves in the suckling phase, or compounds, or pre-mixes, composed of a mixture of powdered milk whey, concentrated milk whey, vegetable oils, emulsifiers, amino acids, starch, cellulose, vegetable proteins, minerals and vitamins, which are dissolved in water and administered to the animals in liquid form in one or two meals a day, according to a nutrition table.

Powdered skimmed milk is used as a noble protein source in animal feeding and the concentration of its components varies depending on the method used to produce it; with the roller method, skimmed milk is subjected to higher drying temperatures than with the spray-dry method; the product obtained is therefore less digestible and has a lower biological value.

At present powdered milk is obtained with different procedures: spray-dry or roller system and then reconstitution in an aqueous environment.

The object of the present application comprises both a new product and a new system for producing milk replacers, which may also be defined as foodstuff for calves (or other species) in the suckling phase, or even with other names (pre-mixes, compound feeds) depending on the legislation in force concerning animal foodstuff, but also a new method for using milk replacers.

The product is obtained by means of a spray-cooling system which consists of propagating the milk replacers with sugars and other proteins, even of vegetable origin, in a system of vegetable fats: spray-cooling (initial liquid phase and solid phase in fast cooling chambers where it takes on the form of microcapsules and microgranules).

With this new technique it is possible to completely eliminate the reconstitution of powdered milk and the animals are fed with a microencapsulated-microgranulated product which guarantees the same performance as other milk replacers, but has the great advantage of being used just as it is, with no need to be reconstituted.

In fact it solves the digestive problem which the present methods are unable to solve, since if powder as-is were not propagated with water, it would fall into the rumen area and be attacked by bacterial flora. The present solution avoids fermentation because the central nucleus is protected with an external coating of vegetable, not animal fats, in view of the current legislation in force and with relation to the regulations against BSE bovine spongiform encelopathy.

To realise the product, the procedure is as follows.

The vegetable fat is dissolved at melting point and mixed with the rest of the components: low-fat powdered milk, skimmed milk, concentrated potato protein, corn starch, soya, concentrated protein, demineralised milk whey, delactosed milk whey, lactose, dextrose, sodium casein, lactic casein, minerals and vitamins.

Various types of vegetable fat are used in the form of triglycerides or fatty acids in order to facilitate digestion.

Emulsifiers are also added to the mixture to facilitate digestion.

Once the mixture has been obtained it is cooled with a spray system so as to obtain a microcapsule or microgranule.

This physical/chemical form has the advantage of being administered without the aid of an aqueous support, thus saving management costs and enormously facilitating distribution.

The technological innovation therefore lies in covering and protecting the skimmed milk powder and all its derivatives and by-products (casein whey, etc.), integrating it with proteins and carbohydrates of vegetable origin, minerals and vitamins, with different matrices of a vegetable lipid nature: fats, gelatines, polymers and waxes and other derivatives, and in the radical change of the feeding system, where the foodstuff, which has always been used in the liquid form, can now be supplied in a solid or dry form.

Substantially, the new product is suitable for feeding all animal species, and it is most specifically intended for use with all the so-called pre-ruminants and the correctly defined ruminants (e.g. weaning calves and calves with white flesh, reared in a state of anaemia without iron, during both the weaning and the fattening phase.

These animal species are currently fed with foodstuff called milk replacers, produced with two different industrial production systems (roller and spray), in which low-fat milk powder and/or its derivatives (caseins, acid whey, sweet whey, lactose, etc.) are in percentages varying from about 40% to 75%, to which are added, up to quota 100, integrations of proteins and lipids, amylaceous integrations of vegetable origin, minerals and vitamins such as to satisfy the requirements of the animals. The principal characteristic of these milk replacers is that they must be dissolved in hot water in special mixers at a temperature varying from 36-38°C to 65-70°C and administered to the animals in buckets with a feeding bottle, or with special self-feeding devices, in liquid form. Due to the closing effect of the oesophageal channel, the product thus administered skips the reticular rumen complex and goes directly into the stomach (abomasum), where the casein is rapidly coagulated by the rennin in an acid environment, after which due to the effect of other enzymes such as pepsinogen and the pre-gastric lipases, the other sugary amylaceous lipid fractions are "digested".

This brief and concise introduction has been given in order to stress the distinct difference between the new product and system and the prior art, which may be summed up in particular in the following points:
1)the product must not be dissolved in water
2)it must not be propagated and administered with water or other liquids
3)it does not need to by-pass the oesophageal channel, but enters the rumen like the other solid foodstuff that form part of the feed, for example hay, straw, cereal and/or pulse meal, etc., but it is not attacked by the bacterial flora in the rumen, remaining intact until it arrives in the glandular stomach by itself or with other components that make up the food ration, in which the casein coagulates and all the digestive processes take place
4)the product is administered just as it is in the feeding trough or through self-feeders, unifeed mixers for dry feed already on the market and in use in cattle and/or pig and poultry farms, in the quantities recommended on the label applied on the pack.

This process guarantees the stability of the principle against atmospheric agents, against oxidising phenomena, against alteration of taste and against bacterial pollution in use (infection control), but it allows the propagation of other active principles which guarantee a correct balancing of the supply of nutrition to the animals.

The fat in the milk is in the form of an emulsion, that is a fine, stable dispersion, in which the fatty phase and the aqueous phase coexist.

The fat is in the form of tiny globules composed of triglycerides, monoglycerides and fatty acids; these have a dimension of a few microns.

The internal component is composed of proteins with a globular structure and of phospholipids; it adheres to the fatty mass because in the outer layer of the internal globule there are triglycerides closely connected to one another; the membrane adheres to this layer of triglycerides with Van der Walls forces.

The fat used for this new microencapsulated, microgranulated product has a triple function:
1. it covers the active principles;
2. it guarantees the supply of lipid nourishment present in the milk;
3. it propagates the active principles in a different way.

An emulsion\suspension is obtained in which the external phase is composed of the lipid fraction while the hydrophilic fraction (amino acids, milk derivatives, carbohydrates, proteins of vegetable origin, minerals, vitamins, etc.) is placed in the internal phase.

Between the two fractions are the emulsifiers such as soya lecithin and others.

The protein fraction is composed of sodium caseinates, lactic casein and all milk derivatives, with integration of proteins of vegetable origin, maize, soya, wheat, etc., which contain a series of amino acids (about 200) placed in the emulsion partly as a suspension.

The microencapsulated microgranulated product is therefore both an emulsion and a suspension. The supply of sugars is guaranteed principally by lactose and derivatives, and also by carbohydrates of vegetable origin and by the principal part of the whey which determines its osmotic pressure in the organism.

Lactose is decisive because it provides the newborn with galactose, which is necessary for the brain and fundamental for the nervous system.

The new product does not need to by-pass the oesophageal channel (which is obligatory for the liquid diet, at risk of digestive problems with fermentation and consequent meteorism of the rumen due to bacterial flora in the rumen), since it can "fall" into the rumen, but remains unchanged until it arrives in the abomasum complex or glandular stomach, to be precise, and is digested normally like other products.

At present there are no suckling products in this microencapsulated microgranulated form on the market or in production, and above all the particles of the individual components - fats, proteins, sugars, starches, minerals, vitamins, etc. - are gathered in a single solution-suspension and simply mixed together, with an emulsion and suspension operation that takes place at the moment of its reconstitution in water at temperatures ranging from 40 to 70°C.

This operation of reconstitution, and especially emulsion and suspension, is no longer necessary with the new product because it takes place before, during the production of the product itself.

The new system and the new product guarantee natural animal welfare, since the assumption of the food is voluntary and not forced as regards time and quantity, respecting also the recent Community directives on animal welfare.

These are the schematic procedures sufficient to enable an expert to realise the invention; consequently, when tangibly applied, there may be variations without detracting from the substance of the innovative concept.

The following claims are therefore expressed with reference to the above description.

## Claims

1. Milk replacer product and/or complete suckling feed, and/or compound feed, and/or pre-mix, for animal feeding **characterised in that** it comprises a nucleus of low-fat powdered milk and all its derivatives and by-products (whey, casein, etc.,) covered with one or more matrices of a vegetable lipid nature: fats, gelatines, polymers and waxes and other derivatives.

2. Milk replacer product, complete suckling feed for animal feeding according to claim 1, **characterised in that** it is obtained by means of a spray cooling system which consists of propagating the milk replacers in a system of vegetable fats: spray, initial liquid phase at the melting point of the fats and solid phase in fast cooling chambers where it takes on the form of microcapsules and/or microgranules.

3. Milk replacer product, complete suckling feed for animal feeding according to claim 2, **characterised in that** the vegetable fat is dissolved at melting temperature and is then mixed with the rest of the components: low-fat powdered milk, skimmed milk, concentrated potato protein, concentrated wheat protein, concentrated soya protein, corn starch, wheat starch, demineralised milk whey, delactosed milk whey, lactose, dextrose, sodium casein, lactic casein and all its derivatives, integrated with minerals and vitamins.

4. Milk replacer product, complete suckling feed for animal feeding according to claim 3, **characterised in that** different types of vegetable fats are used in quantities not less than 15% in the form of triglycerides or fatty acids in order to cover the other fractions that make up the foodstuff itself.

5. Milk replacer product, complete suckling feed for animal feeding according to claim 4, **characterised in that** the mixture obtained is then cooled with a spray cooling system so as to obtain microcapsules and/or microgranules.

6. Milk replacer product, complete suckling feed for animal feeding according to all the previous claims, **characterised in that** the invention comprises both a new milk replacer product and also a new method for using milk replacers.

7. Milk replacer product, complete suckling feed for animal feeding according to all the previous claims, **characterised in that** it can be used for all animal species.

8. Milk replacer product, complete suckling feed for animal feeding according to all the previous claims, **characterised in that** it can be used for the animals called pre-ruminants and ruminants in the suckling, weaning and fattening phases, for example newborn calves and calves with white flesh, reared in a state of anaemia without iron, or calves and bullocks with mixed feeding.

9. Milk replacer product, complete suckling feed for animal feeding according to all the previous claims, **characterised in that** it is formulated as a pre-mix, compound feed or as complete feed for calves (or other animal species) in the suckling, weaning and fattening phase.

10. Milk replacer product, complete suckling feed for animal feeding according to all the previous claims, **characterised in that** it is produced in microencapsulated microgranulated form, insoluble up to 50 °C - 55 °C.

11. Milk replacer product, complete suckling feed for animal feeding according to all the previous claims, **characterised in that** it is formulated with a minimum quantity of 15% vegetable fats, with a protein level N x 6.25 which can range from 5% to 60%,

12. Milk replacer product, complete suckling feed for animal feeding according to all the previous claims, **characterised in that** it has the following optimum ratios between fats, proteins, carbohydrates, minerals and vitamins:
Fat not less than 30%
Proteins from 5% to 60%
Ash from 0,1 to 20%
Untreated cellulose from 0.01 to 10%
Total carbohydrates from 0.1 to 60%
Humidity' from 0,1% to 10.

13. Milk replacer product, complete suckling feed for animal feeding according to all the previous claims, **characterised in that** it is formulated with the sole contribution of vegetable proteins without the aid of milk proteins, in order to formulate products defined also as zero milks, always in microencapsulated-microgranulated form, insoluble at temperatures below 50°C and non dispersible in water, with a minimum fat content of 15%.

14. Milk replacer product, complete suckling feed for animal feeding according to all the previous claims, **characterised in that** it remains unchanged until it reaches the abomasum complex or glandular stomach, to be precise, and is digested normally like other products.

15. Milk replacer product, complete suckling feed for animal feeding according to all the previous claims, **characterised in that** it can be proportioned in quantities no less than kg 0.1 and no more than kg. 2 per 100 Kg live weight of the animal, in the feeding trough or by means of automatic and/or computerised feed distributors.
